# EUROPÄISCHE PATENTSCHRIFT

(11) **EP 0 400 395 B1**
(45) Veröffentlichungstag und Bekanntmachung des Hinweises auf die Patenterteilung: **26.10.1994**
(21) Anmeldenummer: 90109229.6
(22) Anmeldetag: 16.05.1990
(51) Int. Cl.: F16F 9/46, B60G 17/08

(54) **Stossdämpfer**
Shock absorber
Amortisseur de choc

(30) Priorität: 26.05.1989 DE 3917064
(43) Veröffentlichungstag der Anmeldung: 05.12.1990
(73) Patentinhaber: ROBERT BOSCH GMBH, 70442 Stuttgart (DE)
(72) Erfinder: Tischer, Michael, Dipl.-Ing. (FH), D-7101 Abstatt (DE); Spiess, Ewald, Dipl.-Ing. (FH), D-7143 Vaihingen/Enz 2 (DE)

(56) Entgegenhaltungen:
- EP-A- 0 364 757
- DE-U- 8 902 280
- FR-A- 2 552 515

## Beschreibung

### Stand der Technik

Die Erfindung geht aus von einem Stoßdämpfer nach der Gattung des Hauptanspruchs. Ein bekannter Stoßdämpfer (FR-A-2 552 515) zeigt einen in einem Zylinder verschiebbar gelagerten Dämpferkolben mit einem Magnetventil. Mit zunehmender Bestromung einer Magnetspule des Magnetventils wird das Magnetventil von beispielsweise einer geöffneten Stellung in eine geschlossene Stellung verstellt. Ist die Magnetspule nicht bestromt, so führt eine Rückstelleinrichtung das Magnetventil in seinen geöffneten Zustand zurück.

Im Falle eines Defektes kann es z. B. vorkommen, daß die Magnetspule stromlos wird. In diesem Fall erhält man bei dem bekannten Stoßdämpfer zwangsweise die minimale Dämpfung. Die minimale Dämpfung des Stoßdämpfers ist sicherlich in manchen Situationen erforderlich, dürfte jedoch im Falle eines Defektes keinen optimalen Kompromiß darstellen.

Es ist auch noch ein Stoßdämpfer (DE-A-38 35 705) älter angemeldet, dessen Dämpfung mittels einer elektromagnetischen Ventileinrichtung veränderbar ist. Die Ventileinrichtung umfaßt einen Ventilkörper, der je nach Ansteuerung einer in der Ventileinrichtung enthaltenen Magnetspule mehr oder weniger gegen einen Ventilsitz verstellt wird.

Wird bei dieser Lösung der Ventilkörper von einer Magnetkraft der Magnetspule stark gegen den Ventilsitz verstellt, dann erhält man eine große Dämpfung des Stoßdämpfers. Verstellt die Magnetspule den Ventilkörper nur mit kleiner Magnetkraft gegen den Ventilsitz, dann erhält man eine geringe Dämpfung des Stoßdämpfers. Über die Ansteuerung der Magnetspule kann auch hier die Dämpfung des Stoßdämpfers zwischen einer minimalen Dämpfung und einer maximalen Dämpfung je nach Belieben eingestellt werden.

### Vorteile der Erfindung

Gegenüber dem erstgenannten Stoßdämpfer weist der mit den kennzeichnenden Merkmalen des Hauptanspruchs ausgestattete Stoßdämpfer den Vorteil auf, daß im Falle eines Defektes eine vorwählbare, vorzugsweise eine etwa mittlere Dämpfung des Stoßdämpfers eingestellt wird. Die sich in einem solchen Falle einstellende Dämpfung ist unabhängig von der maximalen und der minimalen Dämpfung.

Durch die in den Unteransprüchen aufgeführten Maßnahmen sind vorteilhafte Weiterbildungen und Verbesserungen des im Hauptanspruch angegebenen Stoßdämpfers möglich.

Aus fertigungstechnischen Gründen ist es vorteilhaft, den vorbestimmbaren Drosselquerschnitt im Ventilkörper vorzusehen.

Um den Ventilkörper möglichst einfach und massearm gestalten zu können, ist es besonders vorteilhaft, den vorbestimmbaren Drosselquerschnitt im Kolbengehäuse anzuordnen.

Durch Einbau des Ventils in den vorbestimmbaren Drosselquerschnitt kann dem Stoßdämpfer auch im Falle des Defektes eine beliebig vorwählbare Dämpfungscharakteristik verliehen werden.

### Zeichnung

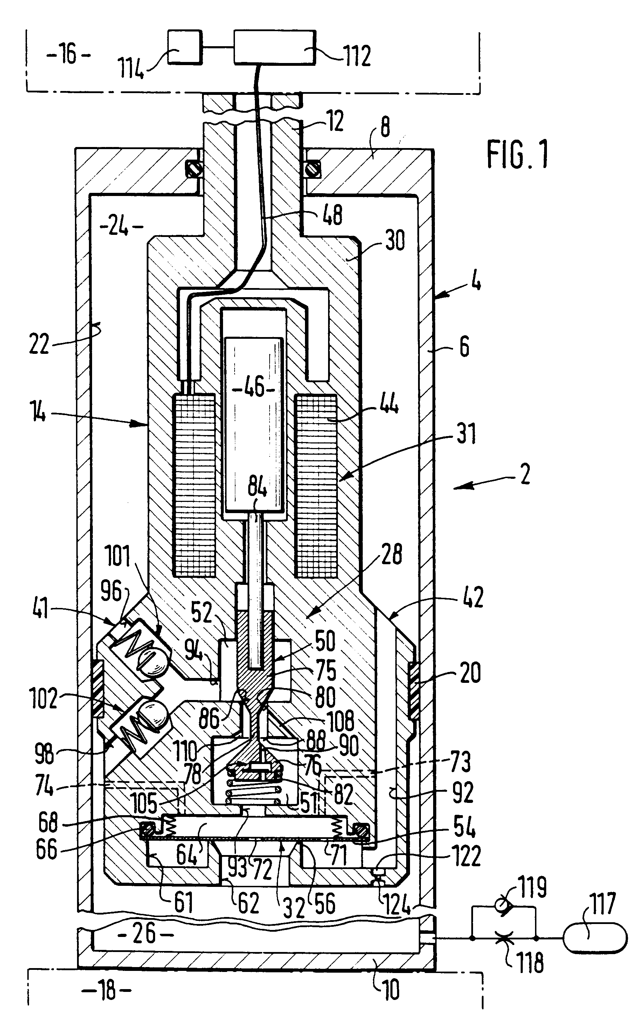

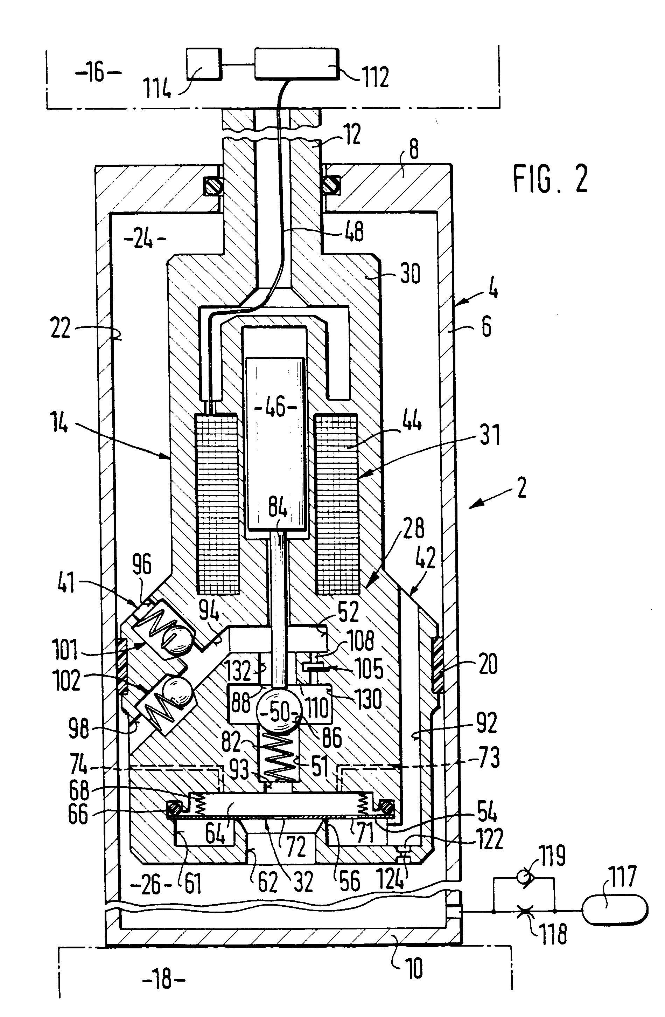

Zwei Ausführungsbeispiele der Erfindung sind in der Zeichnung vereinfacht dargestellt und in der nachfolgenden Beschreibung näher erläutert. Die Figuren 1 und 2 zeigen je ein Ausführungsbeispiel eines Stoßdämpfers.

### Beschreibung der Ausführungsbeispiele

Bei dem in der Figur 1 dargestellten ersten Ausführungsbeispiel hat der Stoßdämpfer 2 einen Zylinder 4 mit einem abschnittweise dargestellten Mantelrohr 6 mit einer ersten Stirnseite 8 und einer zweiten Stirnseite 10. Auf der ersten Stirnseite 8 des Mantelrohres 6 ragt eine Kolbenstange 12 heraus. Von der Kolbenstange 12 sind nur deren beiden Enden dargestellt. Die Kolbenstange 12 ist mit einem Ende mit einem abgestuften Dämpferkolben 14 verbunden und mit einem anderen Ende ist sie an einer strichpunktiert angedeuteten ersten Masse 16 angelenkt. Das heißt, der Dämpferkolben 14 ist mit der ersten Masse 16 verbunden. Die zweite Stirnseite 10 ist mit einer strichpunktiert angedeuten zweiten Masse 18 verbunden. Die erste Masse 16 ist beispielsweise ein Fahrzeugaufbau und die zweite Masse 18 ist z. B. eine Fahrzeugachse. Der Dämpferkolben 14 kann unter Zwischenlage eines Führungsringes 20 an einer inneren Mantelfläche 22 des Mantelrohres 6 axial gleiten. Der Führungsring 20 hat gleichzeitig die Aufgabe einer Dichtung. Ein Innenraum des Zylinders 4 wird durch den Dämpferkolben 14 in einen ersten Arbeitsraum 24 und in einen zweiten Arbeitsraum 26 unterteilt. In der Zeichnung befindet sich der erste Arbeitsraum 24 oberhalb und der zweite Arbeitsraum 26 unterhalb des Dämpferkolbens 14. Die Arbeitsräume 24, 26 sind zumindest teilweise mit einem Druckmedium gefüllt.

In den Dämpferkolben 14 ist mindestens eine ansteuerbare Ventileinrichtung 28 integriert. Die Ventileinrichtung 28 bestimmt einen Druck des Druckmediums in mindestens einem der beiden Arbeitsräume 24, 26 und damit eine Dämpfung des Stoßdämpfers.

Die Ventileinrichtung 28 besteht im wesentlichen aus einem Kolbengehäuse 30 mit einem ersten Einzelventil 31, einem zweiten Einzelventil 32, einer ersten Strömungsverbindung 41 und einer zweiten Strömungsverbindung 42. Beide Strömungsverbindungen 41, 42 verbinden die beiden Arbeitsräume 24, 26. Die erste Strömungsverbindung 41 führt im wesentlichen durch das erste Einzelventil 31, und die zweite Strömungsverbindung 42 führt durch das zweite Einzelventil 32. Ein zwischen den beiden Arbeitsräumen 24, 26 sich austauschender Druckmedium-Strom wird in zwei Teilströme unterteilt. Der erste Teilstrom fließt durch die erste Strömungsverbindung 41, und der zweite Teilstrom fließt durch die zweite Strömungsverbindung 42.

Das erste Einzelventil 31 besteht im wesentlichen aus einer Magnetspule 44, einem Anker 46, einem mit dem Anker 46 verbundenen oder an dem Anker 46 anliegenden Ventilkörper 50, einem ersten Druckanschluß 51 und aus einem zweiten Druckanschluß 52. Durch die hohl ausgebildete Kolbenstange 12 führt eine Leitung 48 zu der Magnetspule 44.

Das zweite Einzelventil 32 umfaßt im wesentlichen eine bewegliche Trennwand 54, einen an dem Kolbengehäuse 30 vorgesehenen Ventilsitz 56, eine mit dem ersten Arbeitsraum 24 verbundene ringförmige erste Druckkammer 61, eine mit dem zweiten Arbeitsraum 26 verbundene zweite Druckkammer 62, einen Druckraum 64, sowie ein elastisches Element 66 und/oder eine Feder 68. In der beweglichen Trennwand 54 ist eine, eine Verbindung zwischen der ersten Druckkammer 61, d. h. dem ersten Arbeitsraum 24 und dem Druckraum 64 herstellende erste Engstelle 71 vorgesehen. Ferner ist mindestens eine weitere, eine Verbindung zwischen dem Druckraum 64 und der zweiten Druckkammer 62, d. h. dem zweiten Arbeitsraum 26 herstellende zweite Engstelle 72 in der beweglichen Trennwand 54 vorgesehen. Die beiden Engstellen 71, 72 können aber auch durch zwei gestrichelt dargestellte, in dem Kolbengehäuse 30 vorgesehene Engstellen 73, 74 ersetzt sein, jedoch weiterhin mit der Maßgabe, daß die erste Engstelle 71 bzw. 73 den ersten Arbeitsraum 24 mit dem Druckraum 64 und die zweite Engstelle 72 bzw. 74 den Druckraum 64 mit dem zweiten Arbeitsraum 26 verbindet. Jede Engstelle 71, 72, 73, 74 hat die Funktion einer Blende oder einer Drossel.

Das elastische Element 66 ist in dem dargestellten Ausführungsbeispiel ein Elastomerbauteil, welches unter anderem die erste Druckkammer 61 gegenüber dem Druckraum 64 am Außenumfang der beweglichen Trennwand 54 abdichten kann. Da ein Spalt zwischen dem Außenumfang der beweglichen Trennwand 54 und dem Kolbengehäuse 30 wegen stets unterschiedlicher Toleranzlagen der Bauteile nie exakt eingestellt werden kann, ist es günstig, wenn das elastische Element 66 die Funktion einer Dichtung hat. Ist die Dichtung nicht erforderlich, so genügt die Feder 68. Ist das elastische Element 66 und/oder die bewegliche Trennwand 54 selbst elastisch genug, dann kann die Feder 68 entfallen.

Der Ventilkörper 50 unterteilt sich in ein erstes Steuerteil 75, in ein zweites Steuerteil 76 und in einen Schaft 78. Der Schaft 78 ist im Durchmesser kleiner als das erste Steuerteil 75 und kleiner als das zweite Steuerteil 76. Das erste Steuerteil 75 des Ventilkörpers 50 ist dem Anker 46 zugewandt, und das zweite Steuerteil 76 ist dem Anker 46 abgewandt. Zwischen den beiden Steuerteilen 75, 76 des Ventilkörpers 50 befindet sich der Schaft 78 des Ventilkörpers 50. Die beiden Steuerteile 75, 76 sind kegelstumpfartig ausgebildet, wobei die nicht vorhandenen aber denkbaren Spitzen der Kegelstümpfe der beiden Steuerteile 75, 76 gegeneinander weisen und die Kegelstümpfe der Steuerteile 75, 76 sich beiderseits des Schaftes 78 anfügen. Das Kolbengehäuse 30 hat einen Absatz 80 mit einem Durchlaß. Der Durchlaß des Absatzes 80 ist im Durchmesser kleiner als das erste Steuerteil 75 und das zweite Steuerteil 76 des Ventilkörpers 50 aber größer als der Durchmesser des Schaftes 78. Der Ventilkörper 50 ist so eingebaut, daß sich auf einer Seite des Absatzes 80 das erste Steuerteil 75 und auf der anderen Seite des Absatzes das zweite Steuerteil 76 befindet. Das erste Steuerteil 75 befindet sich im wesentlichen in dem zweiten Druckanschluß 52, und das zweite Steuerteil 76 befindet sich im wesentlichen in dem ersten Druckanschluß 51. In dem ersten Druckanschluß 51 ist eine Rückstellfeder 82 angeordnet. Die Rückstellfeder 82 stützt sich mit einem Ende am Kolbengehäuse 30 ab und mit einem anderen Ende wirkt sie auf den Ventilkörper 50.

Der Anker 46 kann über einen Stift 84 auf das erste Steuerteil 75 des Ventilkörpers 50 wirken. Je nach Bestromung der Mangnetspule 44 wird der Anker 46 und damit das erste Steuerteil 75 des Ventilkörpers 50 mit mehr oder weniger großer Mangnetkraft in Richtung gegen einen am Übergang vom zweiten Druckanschluß 52 in den Durchlaß des Absatzes 80 ausgebildeten ersten Ventilsitz 86 betätigt. Die Rückstellfeder 82 wirkt mit einer Rückstellkraft entgegen der Magnetkraft der Magnetspule 44 über das zweite Steuerteil 76 auf den Ventilkörper 50. Die Rückstellkraft der Rückstellfeder 82 ist bestrebt das zweite Steuerteil 76 gegen einen am Übergang vom ersten Druckanschluß 51 in den Durchlaß des Absatzes 80 ausgebildeten zweiten Ventilsitzes 88 zu verstellen. Zwischen dem ersten Steuerteil 75 des Ventilkörpers 50 und dem Kolbengehäuse 30 ist ausreichend Spiel vorhanden, so daß ein in dem zweiten Druckanschluß 52 herrschender Druck des Druckmediums eine auf den Ventilkörper 50 wirkende und in dem dargestellten Ausführungsbeispiel nach unten gerichtete Kraft ergibt. Ein in dem ersten Druckanschluß 51 herrschender Druck ergibt eine auf den Ventilkörper 50 wirkende und in dem dargestellten Ausführungsbeispiel nach oben gerichteten Kraft. Ist die Summe der Magnetkraft der Magnetspule 44 plus der nach unten gerichteten Kraft größer als die Rückstellkraft der Rückstellfeder 82 plus der nach oben gerichteten Kraft, dann liegt das erste Steuerteil 75 mit seiner kegelförmigen Seite an dem ersten Ventilsitz 86 an. Im anderen Fall, wenn die Rückstellkraft der Rückstellfeder 82 plus die nach oben gerichtete Kraft größer ist als die Magnetkraft der Magnetspule 44 plus die nach unten gerichtete Kraft, dann liegt das zweite Steuerteil 76 mit seiner kegelförmig ausgebildeten Seite an dem zweiten Ventilsitz 88 an. Liegt das zweite Steuerteil 76 des Ventilkörpers 50 an dem zweiten Ventilsitz 88 an, dann besteht keine Verbindung zwischen dem ersten Druckanschluß 51 und dem zweiten Druckanschluß 52 außer durch eine in dem zweiten Steuerteil 76 des Ventilkörpers 50 vorgesehene vorbestimmbare Drosselstelle 90. Weitere, neben der Drosselstelle 90 alternativ mögliche vorbestimmbare Drosselstellen 108, 110, sind in diesem Text weiter hinten angegeben.

Ein Druck in der ersten Druckkammer 61 und ein Druck in der zweiten Druckkammer 62 bilden zusammen eine Öffnungkraft, welche auf die bewegliche Trennwand 54 wirkt, mit dem Bestreben, die bewegliche Trennwand 54 von dem Ventilsitz 56 abzuheben. Ein Druck in dem Druckraum 64, eine Kraft der Feder 68, eine Kraft des elastischen Elementes 66 und, falls die bewegliche Trennwand 54 verspannt ist, eine in der Trennwand 54 vorhandene Vorspannkraft wirken als Schließkraft in entgegengesetzer Richtung auf die bewegliche Trennwand 54 mit dem Bestreben, die bewegliche Trennwand 54 gegen den Ventilsitz 56 zu betätigen. Je nach Größe der Schließkraft und der Öffnungkraft hebt die bewegliche Trennwand 54 mehr oder weniger von dem Ventilsitz 56 ab.

Die zweite Strömungsverbindung 42 verbindet die beiden Arbeitsräume 24, 26 und führt durch die erste Druckkammer 61, die zweite Druckkammer 62 und durch mindestens eine Öffnung 92 im Kolbengehäuse 30. Die mindestens eine Öffnung 92 verbindet den ersten Arbeitsraum 24 mit der ersten Druckkammer 61. Hebt die bewegliche Trennwand 54 von dem Ventilsitz 56 ab, dann besteht eine Verbindung zwischen der ersten Druckkammer 61 und der zweiten Druckkammer 62 durch einen Spalt zwischen der beweglichen Trennwand 54 und dem Ventilsitz 56 und die zweite Strömungsverbindung 42 ist mehr oder weniger geöffnet. Da die Engstellen 71, 72, 73, 74 relativ klein sind, kann auch bei hohem Druck durch diese Engstellen nur ein kleiner Teil des Druckmediums strömen.

Über einen Durchlaß 93 in einem Absatz des Kolbengehäuses 30 zwischen dem Druckraum 64 und dem ersten Druckanschluß 51 ist der Druckraum 64 ständig mit dem ersten Druckanschluß 51 verbunden. In dem Druckraum 64 und dem ersten Druckanschluß 51 herrscht ein so gut wie gleicher Druck.

Die erste Strömungsverbindung 41 führt aus dem ersten Arbeitsraum 24 durch die Öffnung 92, die erste Engstelle 71 und/oder die erste Engstelle 73 in den Druckraum 64 bzw. aus dem zweiten Arbeitsraum 26 durch die zweite Druckkammer 62 und die zweite Engstelle 72 und/oder die zweite Engstelle 74 in den Druckraum 64. Aus dem Druckraum 64 führt die erste Strömungsverbindung 41 durch den Durchlaß 93 in den ersten Druckanschluß 51, dann durch den Durchlaß im Absatz 80 in den zweiten Druckanschluß 52 und in einen Kanal 94. Aus dem Kanal 94 verzweigt sich die erste Strömungsverbindung 41 in einen weiteren Kanal 96 über den die erste Strömungsverbindung 41 in den ersten Arbeitsraum 24 einmündet. Die erste Strömungsverbindung 41 zweigt aber auch aus dem Kanal 94 in einen weiteren Kanal 98 ab, welcher in den zweiten Arbeitsraum 26 einmündet. In dem Kanal 96 ist ein erstes Rückschlagventil 101 vorgesehen. Das erste Rückschlagventil 101 ist in dem Kanal 96 so angeordnet, daß das Druckmedium nur aus dem zweiten Druckanschluß 52 durch den Kanal 96 in Richtung des ersten Arbeitsraums 24 strömen kann, aber ein umgekehrtes Strömen ist nicht möglich. In dem Kanal 98 der ersten Strömungsverbindung 41 ist ein zweites Rückschlagventil 102 vorgesehen, welches so angeordnet ist, daß das Druckmedium nur in einer Richtung aus dem zweiten Druckanschluß 52 durch den Kanal 94 und den Kanal 98 in den zweiten Arbeitsraum 26 strömen kann.

Falls eine Druckdifferenz zwischen dem ersten Arbeitsraum 24 und dem zweiten Arbeitsraum 26 besteht, dann versucht das Druckmedium durch den Dämpferkolben 14 mit der Ventileinrichtung 28 von einem Arbeitsraum 24, 26 in den jeweils anderen Arbeitsraum zu gelangen. Die Druckdifferenz kann z. B. bei Relativbewegung zwischen dem Dämpferkolben 14 und dem Zylinder 4 entstehen.

Bei einer Druckdifferenz zwischen den beiden Arbeitsräumen 24, 26 strömt der erste Teilstrom des Druckmedium-Stromes durch die erste Strömungsverbindung 41 aus einem der beiden Arbeitsräume 24, 26 in den jeweils anderen Arbeitsraum. Auch wenn sich ein relativ großer Druckmedium-Strom zwischen den beiden Arbeitsäumen 24, 26 austauscht, so ist der erste Teilstrom nur relativ klein, und der überwiegende Teil des Druckmedium-Stromes strömt als zweiter Teilstrom durch die zweite Strömungsverbindung 42. Die beiden Rückschlagventile 101, 102 sind in vorteilhafter Weise nur wenig vorgespannt und stellen somit für den relativ kleinen ersten Teilstrom nur einen kleinen Widerstand dar, so daß der Druck in dem zweiten Druckanschluß 52 nicht oder so gut wie nicht größer ist als der Druck in einem der beiden Arbeitsräume 24 oder 26, in dem der jeweils kleinere Druck herrscht. Bei einer Druckdifferenz zwischen den beiden Arbeitsräumen 24, 26 strömt etwas vom Druckmedium durch die erste Engstelle 71, 73 und durch die zweite Engstelle 72, 74. Dies bedeutet einen Druckabfall an der ersten Engstelle 71, 73 ebenso auch einen Druckabfall an der zweiten Engstelle 72, 74. Dies bedeutet ferner, wenn der Druck in dem ersten Arbeitsraum 24 größer ist als in dem zweiten Arbeitsraum 26, daß der Druck in dem Druckraum 64 größer ist als in dem zweiten Arbeitsraum 26 aber kleiner als in dem ersten Arbeitsraum 24. Ist der Druck in dem zweiten Arbeitsraum 26 größer als im dem ersten Arbeitsraum 24, dann ist, wegen dem Druckabfall an den beiden Engstellen 71, 72 bzw. 73, 74, der Druck in dem Druckraum 64 größer als der Druck in dem ersten Arbeitsraum 24 aber gleichzeitig auch kleiner als der Druck in dem zweiten Arbeitsraum 26. Dies bedeutet, daß bei einer Druckdifferenz zwischen den Drücken in den beiden Arbeitsräumen 24 und 26 der Druck in dem Druckraum 64 und damit auch der Druck in dem ersten Druckanschluß 51 größer ist als der Druck in dem zweiten Druckanschluß 52.

Im Fortgang dieser Beschreibung wird zwischen zwei Betriebszuständen des Stoßdämpfers unterschieden. Im ersten Betriebszustand, dem regulären Betriebszustand, ist die Magnetspule 44 des ersten Einzelventils 31 bestromt und zwar so, daß das erste Steuerteil 75 des Ventilkörpers 50 mehr oder weniger gegen den ersten Ventilsitz 86 gedrückt wird. Im zweiten Betriebszustand, z. B. bei einem Defekt in der Leitung 48 oder z. B. wegen zu schwacher Bestromung der Magnetspule 44, überwiegt die Summe aus der Rückstellkraft der Rückstellfeder 82 plus der nach oben gerichteten Kraft des Druckes in dem ersten Druckanschluß 51 und drückt das zweite Steuerteil 76 des Ventilkörpers 50 gegen den zweiten Ventilsitz 88.

Da im ersten Betriebszustand ein Gleichgewicht zwischen der Summe aus der Magnetkraft der Magnetspule 44 plus der nach unten gerichteten Kraft und der Summe aus der Rückstellkraft der Rückstellfeder 82 plus der nach oben gerichteten Kraft des im ersten Druckanschluß 51 herrschenden Druckes besteht, kann über die Magnetkraft und damit über mehr oder weniger starke Bestromung der Magnetspule 44 der Druck in dem ersten Druckanschluß 51 gesteuert werden. Wegen des Gleichgewichts zwischen der an der beweglichen Trennwand 54 herrschenden Schließkraft und der dort herrschenden Öffnungkraft, wobei der Druck in dem Druckraum 64 die Schließkraft beeinflußt, kann über den Druck in dem Druckraum 64 und damit über den Druck im ersten Druckanschluß 51 und somit über die Magnetkraft, d. h. über die Bestromung der Magnetspule 44 die Bewegung der beweglichen Trennwand 54 gesteuert werden. Ist der Druck im ersten Arbeitsraum 24 größer als im zweiten Arbeitsraum 26, dann versucht der Druck in der ersten Druckkammer 61 die bewegliche Trennwand 54 vom Ventilsitz 56 abzuheben. Da der Druck in der ersten Druckkammer 61 an der Öffnungskraft beteiligt ist, kann, wegen dem Gleichgewicht zwischen der Öffnungkraft und der Schließkraft, über den Druck in dem Druckraum 64 der Druck in der ersten Druckkammer 61 und damit der Druck in dem ersten Arbeitsraum 24 gesteuert werden. Ist der Druck in dem zweiten Arbeitsraum 26 größer als im ersten Arbeitsraum 24, dann ist es entsprechend, und es kann über den Druck in dem Druckraum 64 bzw. über die Bestromung der Magnetspule 44 der Druck in dem zweiten Arbeitsraum 26 gesteuert werden.

Der Druck in der ersten Druckkammer 61, d. h. in dem ersten Arbeitsraum 24 und der Druck in der zweiten Druckkammer 62, d. h. in dem zweiten Arbeitsraum 26 sind an der auf die bewegliche Trennwand 54 wirkenden Öffnungskraft beteiligt. Aus Gleichgewichtsgründen kann somit durch die Magnetkraft der Magnetspule 44, über den Druck im ersten Druckanschluß 51 und über den Druck im Druckraum 64 auf die Drücke in den Arbeitsräumen 24, 26 eingewirkt werden. Das heißt, je nach Ansteuerung der Magnetspule 44 kann die Druckdifferenz zwischen den beiden Arbeitsräumen 24, 26 gesteuert werden.

Die Druckdifferenz zwischen den beiden Arbeiträumen 24, 26 bestimmt die Dämpfung des Stoßdämpers. Ein besonderer Vorteil dieses Stoßdämpfers ist, daß die Druckdifferenz und damit die Dämpfung im wesentlichen von der Magnetkraft und damit von der Bestromung der Magnetspule 44 abhängt und nicht oder so gut wie nicht von der Größe des Druckmedium-Stromes, d. h. der Relativgeschwindigkeit zwischen dem Dämpferkolben 14 und dem Zylinder 4.

Im zweiten Betriebszustand liegt, wie oben erwähnt, das zweite Steuerteil 76 des Ventilkörpers 50 am zweiten Ventilsitz 88 des Kolbengehäuses 30 an. Im zweiten Betriebszustand hat die Magnetkraft der Magnetspule 44 keinen Einfluß mehr auf den Druck im Druckraum 64 und damit auf den Druck in den Arbeitsräumen 24, 26. Das erste Steuerteil 75 des Ventilkörpers 50 hat im zweiten Betriebszustand von dem ersten Ventilsitz 86 vollständig abgehoben. Der durch die erste Strömungsverbindung 41 strömende erste Teilstrom des Druckmedium-Stromes strömt im zweiten Betriebszustand durch die vorbestimmbare Drosselstelle 90 im zweiten Steuerteil 76 des Ventilkörpers 50.

Über den Druckabfall des durch die vorbestimmbare Drosselstelle 90 strömenden ersten Teilstromes kann der Druck in dem ersten Druckanschluß 51 und damit der Druck in dem Druckraum 64 und somit der Druck in den Arbeitsräumen 24, 26 bestimmt werden.

Die vorbestimmbare Drosselstelle 90 kann auf verschiedene Weise ausgestaltet sein. Die vorbestimmbare Drosselstelle 90 kann z. B. eine einfache Bohrung sein; sie kann aber auch ein Ventil 105, wie z. B. ein Druckbegrenzungsventil enthalten. In der Zeichnung enthält die vorbestimmbare Drosselstelle 90 als Ventil 105 beispielhaft ein einfach herzustellendes Plattenventil, welches bei einem bestimmten Druck öffnet und für relativ konstanten Druckabfall an der vorbestimmbaren Drosselstelle 90 sorgt.

Zusätzlich zu der vorbestimmbaren Drosselstelle 90 oder anstatt der vorbestimmbaren Drosselstelle 90 im Ventilkörper 50 kann auch eine vorbestimmbare Drosselstelle 108 innerhalb des Kolbengehäuses 30 vorgesehen sein. Die vorbestimmbare Drosselstelle 108 ist so vorgesehen, daß im ersten Betriebszustand durch diese vorbestimmbare Drosselstelle 108 keine Verbindung zwischen dem ersten Druckanschluß 51 und dem zweiten Druckanschluß 52 besteht. Im zweiten Betriebszustand, wenn das zweite Steuerteil 76 des Ventilkörpers 50 am zweiten Ventilsitz 88 anliegt, besteht eine Verbindung aus dem ersten Druckanschluß 51 durch die vorbestimmbare Drosselstelle 108 in den zweiten Druckanschluß 52.

Die vorbestimmbare Drosselstelle 108 ist in dem dargestellten Ausführungsbeispiel eine einfache Bohrung, sie kann jedoch auch, ebenso wie die andere vorbestimmbare Drosselstelle 90, mit einem Ventil 105 versehen sein.

Zusätzlich zu den vorbestimmbaren Drosselstellen 90, 108 oder anstatt der beiden vorbestimmbaren Drosselstellen 90, 108 kann die Ventileinrichtung 28 mit einer vorbestimmbaren Drosselstelle 110 versehen sein. Die vorbestimmbare Drosselstelle 110 ist eine beliebig gestaltete, einfach herstellbare Kerbe am zweiten Ventilsitz 88 des Kolbengehäuses 30.

Da im ersten Betriebszustand das zweite Steuerteil 76 vom zweiten Ventilsitz 88 weit abgehoben ist, haben die vorbestimmbaren Drosselstellen 90, 108, 110 im ersten Betriebszustand keinen Einfluß auf die Dämpfung. Im zweiten Betriebszustand ist das erste Steuerteil 75 des Ventilkörpers 50 von dem ersten Ventilsitz 86 weit entfernt. Im zweiten Betriebszustand liegt das zweite Steuerteil 76 des Ventilkörpers 50 am zweiten Ventilsitz 88 an, und der erste Teilstrom wird durch die vorbestimmbaren Drosselstellen 90, 108, 110 angedrosselt.

Das dargestellte Ausführungsbeispiel ist nur beispielhaft mit den drei vorbestimmbaren Drosselstellen 90, 108, 110 versehen. Normalerweise wird man die Ventileinrichtung 28 nur mit einer dieser vorbestimmbaren Drosselstellen 90, 108, 110 ausstatten.

Der erfindungsgemäße Stoßdämpfer bietet eine Reihe von Vorteilen: Bei dem Stoßdämpfer mit der Ventileinrichtung 28 kann durch geeignete Dimensionierung erreicht werden, daß durch die erste Strömungsverbindung 41 nur ein kleiner Teil, d. h. ein kleiner erster Teilstrom des sich zwischen den beiden Arbeitsräumen 24, 26 austauschenden Druckmediums, hindurchströmt und daß der weitaus überwiegendere Teil des Druckmediums, d. h. ein großer zweiter Teilstrom, durch die zweite Strömungsverbindung 42 ausgetauscht wird. Deshalb können für die Kanäle 94, 96, 98 kleine Querschnittsflächen gewählt werden. Auch die Rückschlagventile 101, 102 und die beiden Druckanschlüsse 51, 52 können klein dimensioniert ausgeführt werden. Dadurch ist es möglich, einen relativ kleinen Ventilkörper 50 und einen kleinen Anker 46 zu wählen, welcher durch eine relative kleine Magnetspule 44 betätigt wird. Weil durch das erste Einzelventil 31 nur eine kleine Teilmenge, d. h. der erste Teilstrom des Druckmedium-Stromes, fließt, muß der Ventilkörper 50 im ersten Betriebszustand nur einen relativ kleinen Hub zurücklegen können. Weil zur Betätigung des Ventilkörpers 50 nur relativ kleine Kräfte erforderlich sind und wegen dem nur kleinen Hub ist es relativ leicht möglich, den Ventilkörper 50 relativ reaktionsschnell zu betätigen. Die Größe des ersten Teilstromes des Druckmediums, welches durch die erste Strömungsverbindung 41 und damit durch das erste Einzelventil 31 strömt, ist im wesentlichen von der Größe der Engstellen 71, 72, 73, 74 abhängig. Die Engstellen 71, 72, 73, 74 können ziemlich klein gewählt werden, sollten allerdings nicht so klein gewählt werden, daß sich eventuelle Schmutzpartikel des Druckmediums in den Engstellen 71, 72, 73, 74 verfangen könnten.

In dem gezeigten Ausführungsbeispiel nimmt der Druck in dem Druckraum 64 mit steigender Magnetkraft zu. Ist die Magnetspule 44 ein Proportionalmagnet, dann ist der Druck in dem Druckraum 64 und damit die Dämpfung direkt proportional einem Ansteuerstrom, welcher von einer Steuereinheit 112 durch die Leitung 48 der Magnetspule 44 zugeführt wird.

Durch einen Geber 114 kann über die Steuereinheit 112 im ersten Betriebszustand der Ansteuerstrom für die Magnetspule 44 und damit die Dämpfung des Stoßdämpfers 2 eingestellt werden. Der Geber 114 kann z. B. ein Sensor und/oder ein Handhebel usw. sein.

Ist der Stoßdämpfer in erfinderischer Weise mit dem zweiten Ventilsitz 88 und mit mindestens einem der vorbestimmbaren Drosselstellen 90, 108, 110 versehen, so kann der Stoßdämpfer 2 vorteilhafterweise so ausgeführt sein, daß im ersten Betriebszustand die Dämpfung in sehr weiten Grenzen veränderbar ist, ohne befürchten zu müssen, daß im Falle eines Defektes sich eine unerwünschte, eventuell sogar gefährliche, extreme Dämpfung einstellt.

Beim Einfahren der Kolbenstange 12 in den Zylinder 4 wird entsprechend dem Kolbenstangen-Querschnitt ein Teil des Druckmediums aus dem Zylinder 4 verdrängt. Beim Ausfahren der Kolbenstange 12 aus dem Zylinder 4 soll in den Zylinder 4 Druckmedium nachströmen können. Zu diesem Zweck ist der zweite Arbeitsraum 26 mit einem Ausgleichsraum 117 verbunden. Damit auch bei einem relativ niedrigen Druck in dem Ausgleichsraum 117 in dem zweiten Arbeitsraum 26 ein relativ hoher Druck und damit eine relativ große Dämpfung erzeugt werden kann, wurde zwischen dem Ausgleichsraum 117 und dem zweiten Arbeitsraum 26 eine Drossel 118 eingebaut. Beim Rückströmen des Druckmediums aus dem Ausgleichsraum 117 in den zweiten Arbeitsraum 26 ist die Drossel 118 nicht erforderlich, weshalb zu dieser Drossel 118 ein Rückschlagventil 119 parallel angeordnet ist. Das Rückschlagventil 119 ist so eingebaut, daß das Druckmedium nur bei Fließrichtung aus dem Ausgleichsraum 117 in den Arbeitsraum 26 durch das Rückschlagventil 119 strömen kann. Der Ausgleichsraum 117 kann z. B. ein gasgefüllter Druckspeicher sein. Ist der Druck in dem Ausgleichsraum 117 ausreichend groß, können auch die Drossel 118 und das Rückschlagventil 119 entfallen.

Damit bei Relativbewegung zwischen dem Dämpferkolben 14 und dem Mantelrohr 6 das in einem der Arbeitsräume 24, 26 verdrängte Druckmedium-Volumen gleich dem im anderen Arbeitsraum nachfließenden Volumen ist, kann eine doppelte Kolbenstange 12 verwendet werden, die beiderseits des Dämpferkolbens 14 aus den Stirnseiten 8, 10 des Zylinders 4 herausragt. Besonders günstig ist es, wenn beide Seiten der doppelten Kolbenstange 12 etwa gleiche Durchmesser haben.

Die im Falle eines Defektes wirksame, vorbestimmbare Drosselstelle 90, 108, 110 kann beliebig gewählt werden. Damit ist es möglich, den Stoßdämpfer so zu gestalten, daß im Falle eines Defektes sich z. B. eine mittlere Dämpfung einstellt. Damit werden im Falle eines Defektes extreme Situationen vermieden.

In der Zeichnung ist der Übersichtlichkeit wegen das Kolbengehäuse 30 so dargestellt, als ob es aus einem Stück bestehen würde. Um aber z. B. die Magnetspule 44, die Rückstellfeder 82, den Ventilkörper 50 und die bewegliche Trennwand 54 montieren zu können, ist es notwendig, das Kolbengehäuse 30 mehrteilig herzustellen und zusammenzufügen, was jedem Fachmann geläufig ist. Auch der in der Zeichnung einstückig dargestellte Ventilkörper 50 kann aus mehreren Teilen zusammengesetzt sein.

Neben den Strömungsverbindungen 41, 42 kann der Dämpferkolben 14 auch noch mit mindestens einer weiteren Strömungsverbindung 122 versehen sein. In einer solchen Strömungsverbindung kann sich eine variable oder konstante Drossel oder Blende 124 befinden.

Die Ventileinrichtung 28 mit den Strömungsverbindungen 41, 42 und die weitere Strömungsverbindung 122 sind in dem dargestellten Ausführungsbeispiel im Dämpferkolben 14 angeordnet. Es ist aber auch möglich, die Ventileinrichtung 28 mit der ersten Strömungsverbindung 41 und der zweiten Strömungsverbindung 42 und/oder die weitere Strömungsverbindung 122 und/oder weitere Strömungsverbindungen außerhalb des Dämpferkolbens 14 z. B. an einer Außenfläche des Mantelrohres 6 des Zylinders 4 oder aber auch an einer sonstigen nicht dargestellten Trennwand innerhalb des Zylinders 4 anzuordnen.

Als Ausführungsbeispiel wurde für den erfindungsgemäßen Stoßdämpfer ein Einrohr-Stoßdämpfer gewählt. Dies ist jedoch nur beispielhaft. Der Stoßdämpfer könnte genauso gut z. B. ein sogenannter Zweirohr-Stoßdämpfer sein.

Die Ventileinrichtung 28 umfaßt, wie oben angegeben, das erste Einzelventil 31 und das zweite Einzelventil 32. Das zweite Einzelventil 32 enthält die bewegliche Trennwand 54. Die bewegliche Trennwand ist in dem dargestellten Ausführungsbeispiel eine aus Metall oder Kunststoff bestehende dünne Membrane. Die bewegliche Trennwand 54 kann aber auch, anstatt aus der Membrane, aus zwei axial betätigbaren Kolben bestehen, die von zwei Federn gegen je einen Anschlag betätigt werden, so wie es in der Figur 1 der beim Deutschen Patentamt mit dem Aktenzeichen P 38 35 705.4 angemeldeten Erfindung dargestellt ist. In dem dort dargestellten Ausführungsbeispiel enthält die erste Strömungsverbindung vier Rückschlagventile. Dies ist auch hier möglich.

Die in Form einer dünnen Membrane ausgeführte bewegliche Trennwand 54 kann aber auch, wie in der Figur 2 der unter dem Aktenzeichen P 38 35 705.4 angemeldeten Erfindung dargestellt, in Form eines Stufenkolbens ausgebildet sein, welcher von einer Feder gegen einen Ventilsitz betätigt wird.

Die in der Anmeldung mit dem Aktenzeichen P 38 35 705.4 genannten Vorteile jenes Stoßdämpfers gelten in vollem Umfang auch bei dem neuen Stoßdämpfer dieser Erfindung.

In der Figur 2 ist ein zweites Ausführungsbeispiel dargestellt. In den Figuren 1 und 2 sind gleiche oder gleichwirkende Teile mit denselben Bezugszeichen versehen. Der Stoßdämpfer des zweiten Ausführungsbeispiels besteht im wesentlichen aus den gleichen Teilen wie der Stoßdämpfer des ersten Ausführungsbeispiels.

Der Ventilkörper 50 des ersten Ausführungsbeispiels ist im wesentlichen ein rotationssymmetrisches, längliches, in mehrere Abschnitte aufgeteiltes Glied. Der Ventilkörper 50 des zweiten Ausführungsbeispiels ist ein kugelförmiges Gebilde. Der Ventilkörper 50 des zweiten Ausführungsbeispiels befindet sich zumindest teilweise innerhalb einer Ventilkammer 130. Der erste Druckanschluß 51 geht auf der dem Durchlaß 93 abgewandten Seite an einer Kante in die Ventilkammer 130 über. Der Durchmesser des ersten Druckanschlusses 51 ist kleiner als der Durchmesser des Ventilkörpers 50. Der Durchmesser der Ventilkammer 130 ist größer als der Durchmesser des Ventilkörpers 50. Die Kante am Übergang vom ersten Druckanschluß 51 in die Ventilkammer 130 bildet den ersten Ventilsitz 86. Die Ventilkammer 130 geht auf ihrer dem ersten Druckanschluß 51 abgewandten Seite in einen Durchlaß 132 über. Der Durchlaß 132 hat einen kleineren Durch-. messer als der kugelförmige Ventilkörper 50. Der Übergang der Ventilkammer 130 in den Durchlaß 132 bildet den zweiten Ventilsitz 88. Der Durchlaß 132 geht auf der der Ventilkammer 130 abgewandten Seite in den zweiten Druckanschluß 52 über. Parallel zum Durchlaß 132 ist in dem Kolbengehäuse 30 die vorbestimmbare Drosselstelle 108 vorgesehen. Diese verbindet die Ventilkammer 130 mit dem zweiten Druckanschluß 52.

Der Abstand des zweiten Ventilsitzes 88 vom ersten Ventilsitz 86 ist so groß, daß dem Ventilkörper 50 ausreichend Hub zur Verfügung steht. Im ersten Betriebszustand wird, ebenso wie im ersten Ausführungsbeispiel, der Ventilkörper 50 durch die Magnetkraft der Magnetspule 44 über den Anker 46 und über den Stift 84 mehr oder weniger gegen den ersten Ventilsitz 86 bewegt.

Im zweiten Betriebszustand wird, ebenso wie beim ersten Ausführungsbeispiel, der Ventilkörper 50 gegen den Ventilsitz 88 bewegt. Damit ist ein Durchfluß des Druckmediums aus dem ersten Druckanschluß 51 durch die Ventilkammer 130 und durch den Durchlaß 132 in den zweiten Druckanschluß 52 nicht möglich. Das Druckmedium kann jedoch aus dem ersten Druckanschluß 51, durch die Ventilkammer 130 und durch die vorbestimmbare Drosselstelle 108 in den zweiten Druckanschluß 52 strömen. Somit wird auch im zweiten Ausführungsbeispiel nach Figur 2 die Dämpfung des Stoßdämpfers im zweiten Betriebszustand von der vorbestimmbaren Drosselstelle 108 bestimmt. Im übrigen ist die Funktionsweise des Stoßdämpfers des zweiten Ausführungsbeispiels gleich wie die des Stoßdämpfers des ersten Ausführungsbeispiels.

Selbstverständlich kann auch beim zweiten Ausführungsbeispiel nach Figur 2 zusätzlich zu der vorbestimmbaren Drosselstelle 108 oder anstatt dieser Drosselstelle 108 im Bereich des zweiten Ventilsitzes 88 die vorbestimmbare Drosselstelle 110 vorgesehen werden. Es ist aber auch möglich, anstatt oder zusätzlich zu den vorbestimmbaren Drosselstellen 108, 110 die vorbestimmbare Drosselstelle 90 innerhalb des Ventilkörpers 50 vorzusehen. Der Einfachheit halber ist diese jedoch im zweiten Ausführungsbeispiel nach Figur 2 nicht eingezeichnet. Wird die vorbestimmbare Drosselstelle 90 innerhalb des Ventilkörpers 50 vorgesehen, dann muß durch eine Verdrehsicherung dafür gesorgt werden, daß, wenn der Ventilkörper 50 am zweiten Ventilsitz 88 anliegt, die vorbestimmbare Drosselstelle 90 so ausgerichtet ist, daß über diese Drosselstelle 90 eine Verbindung aus dem ersten Druckanschluß 51 in den zweiten Druckanschluß 52 besteht.

## Patentansprüche

1. Stoßdämpfer, insbesondere für Fahrzeuge, mit einem in einem ein Druckmedium enthaltenden Zylinder (4) verschiebbaren, diesen in einen ersten und in einen zweiten Arbeitsraum (24, 26) unterteilenden Dämpferkolben (14), wobei der Zylinder und der Dämpferkolben an jeweils einer Masse (16, 18) angelenkt sind, dadurch gekennzeichnet, daß mindestens eine einen Druck des Druckmediums in einem der Arbeitsräume bestimmende Ventileinrichtung (28) mit einem Ventilsitz (86) und einem gegen den Ventilsitz (86) verstellbaren Ventilkörper (50) vorgesehen ist, wobei der Ventilkörper (50) bei einem Defekt an einen zweiten Ventilsitz (88) anlegbar ist und dem Druckmedium dabei eine vorbestimmbare Drosselstelle (90, 108, 110) zur Verfügung steht.

2. Stoßdämpfer nach Anspruch 1, dadurch gekennzeichnet, daß die vorbestimmbare Drosselstelle (90, 108, 110) im Ventilkörper (50) vorgesehen ist.

3. Stoßdämpfer nach Anspruch 1, dadurch gekennzeichnet, daß die vorbestimmbare Drosselstelle (90) in einem Kolbengehäuse (30) vorgesehen ist.

4. Stoßdämpfer nach einem der Ansprüche 1 bis 3, dadurch gekennzeichnet, daß in der vorbestimmbaren Drosselstelle (90, 108) ein Ventil (105) vorgesehen ist.

5. Stoßdämpfer nach einem der Ansprüche 1 bis 3, dadurch gekennzeichnet, daß die vorbestimmbare Drosselstelle (110) eine in dem zweiten Ventilsitz (88) vorgesehene Kerbe ist.

## Claims

1. A shock absorber, particularly for vehicles, with a shock-absorber piston (14) which is displaceable in a cylinder (4) containing a pressure medium and divides said cylinder into a first and a second working space (24, 26), the cylinder and the shock-absorber piston being articulated on respective masses (16, 18), wherein at least one valve device (28) which determines a pressure of the pressure medium in one of the working spaces and has a valve seat (86) and a valve element (50) displaceable against the valve seat (86) is provided, it being possible, in the event of a defect, for the valve element (50) to be laid against a second valve seat (88), in which case there is a predeterminable orifice (90, 108, 110) for the pressure medium.

2. The shock absorber as claimed in claim 1, wherein the predeterminable orifice (90, 108, 110) is provided in the valve element (50).

3. The shock absorber as claimed in claim 1, wherein the predeterminable orifice (90) is provided in a piston housing (30).

4. The shock absorber as claimed in any of claims 1 to 3, wherein a valve (105) is provided in the predeterminable orifice (90, 108).

5. The shock absorber as claimed in any of claims 1 to 3, wherein the predeterminable orifice (110) is a notch provided in the second valve seat (88).

## Revendications

1. Amortisseur de choc, notamment pour véhicule, avec un piston d'amortisseur (14) susceptible de se déplacer dans un cylindre (4) contenant un fluide sous pression, et divisant ce cylindre en une première et une seconde chambres de travail (24, 26), tandis que le cylindre et le piston d'amortisseur sont respectivement articulés sur une masse (16, 18), amortisseur de choc caractérisé en ce qu'au moins un dispositif de soupape (28) déterminant une pression du fluide sous pression dans l'une des chambres de travail, est muni d'un siège de soupape (86) et d'un corps de soupape (50) susceptible d'être déplacé contre ce siège de soupape (86), tandis que le corps de soupape (50), dans le cas d'un défaut, est susceptible d'être appliqué contre un second siège de soupape (88), un point d'étranglement susceptible d'être prédéterminé (90, 108, 110) étant alors disponible pour le fluide sous pression.

2. Amortisseur de choc selon la revendication 1, caractérisé en ce que le point d'étranglement susceptible d'être prédéterminé (90, 108, 110) est prévu dans le corps de soupape (40).

3. Amortisseur de choc selon la revendication 1, caractérisé en ce que le point d'étranglement susceptible d'être prédéterminé (90) est prévu dans un boîtier de piston (30).

4. Amortisseur de choc selon l'une des revendications 1 à 3, caractérisé en ce que, sur le point d'étranglement prédéterminé (90, 108), est prévue une soupape (105).

5. Amortisseur de choc selon l'une des revendications 1 à 3, caractérisé en ce que le point d'étranglement susceptible d'être prédéterminé (110) est une encoche prévue sur le second siège de soupape (88).
